# EUROPÄISCHE PATENTANMELDUNG

(11) **EP 1 795 883 A2**
(43) Veröffentlichungstag der Anmeldung: **13.06.2007**
(21) Anmeldenummer: 06025562.7
(22) Anmeldetag: 11.12.2006
(51) Int. Cl.: G01N 3/04

(54) **Spannzeug zum kraftschlüssigen Einspannen von Proben**

(30) Priorität: 09.12.2005 DE 102005059293
(71) Anmelder: SOBAtec GmbH Sondermaschinen & Bahntechnik, 01917 Kamenz (DE); Dyna-Mess Prüfsysteme GmbH, 52222 Aachen/Stolberg (DE)
(72) Erfinder: Steiner, Frank, 44149 Dortmund (DE)
(74) Vertreter: Hudler, Frank

(57) **Zusammenfassung**

Die Erfindung betrifft ein Spannzeug zum kraftschlüssigen Einspannen von Proben für Werkstoff-Prüfmaschinen, bestehend aus einem Spannkopf mit Spannbacken mit einander gegenüberliegenden Spannflächen, die zur Erzeugung einer Translations- oder Spannbewegung zum Einspannen eines Prüflings zwischen den Spannbacken mit einem druckmittelbetätigten Antrieb gekoppelt sind. Mit der Erfindung soll ein Spannzeug zum kraftschlüssigen Einspannen von Proben geschaffen werden, mit dem eine besonders kompakte Bauweise möglich ist und das eine besonders gute Synchronisation der Spannbacken gewährleistet. Erreicht wird das dadurch, dass die Spannbacken (2, 3) über eine Kraftübersetzungs- und -umlenkungseinrichtung mit dem Antrieb gekoppelt sind, der aus einer Zylinder/Kolben-Anordnung (12, 13, 14) besteht und die oberhalb und parallel zur Betätigungsrichtung der Spannbacken (2, 3) im Gehäuse (11) des Spannzeuges (1) angeordnet sind.

## Beschreibung

Die Erfindung betrifft ein Spannzeug zum kraftschlüssigen Einspannen von Proben für Werkstoff-Prüfmaschinen, bestehend aus einem Spannkopf mit Spannbacken mit einander gegenüberliegenden Spannflächen, die zur Erzeugung einer Translations- oder Spannbewegung zum Einspannen eines Prüflings zwischen den Spannbacken mit einem druckmittelbetätigten Antrieb gekoppelt sind.

Derartige Spannzeuge sind in einer Vielzahl von Ausführungsformen in Werkstoff-Prüfmaschinen im Einsatz und werden zum kraftschlüssigen Einspannen beliebiger Proben eingesetzt. Die eingespannten Proben werden in den Werkstoff-Prüfmaschinen unterschiedlichen Belastungsproben, z.B. einer Zerreißprüfung durch Zugbeanspruchung, ausgesetzt. Die zu prüfenden Proben können aus beliebigen Materialien, z.B. Metallen oder Kunststoffen, bestehen.

Die Betätigung der Spannzeuge, d.h. die Erzeugung der Spannbewegung der Spannbacken wird üblicherweise durch eine Längsverschiebung von Spannelementen auf Führungselementen innerhalb des Spannkopfes realisiert, welche die durch den druckmittelbetätigten Antrieb erzeugte Längsbewegung in eine Querbewegung der Spannbacken umwandelt. Ein Beispiel für ein solches Spannzeug geht aus der DE 102 42 757 A1 hervor. Als Antrieb werden hydraulisch oder pneumatisch betätigte Antriebe bevorzugt. Wobei pneumatisch betätigte Antriebe gegenüber hydraulisch betätigten Antrieben bei geringeren erforderlichen Kräften bevorzugt werden. Pneumatisch betätigte Antriebe haben den Vorteil, dass das für den hier notwendigen Antrieb erforderliche Medium (Druckluft) aus einer in den meisten Firmen ohnehin vorhandenen Ringleitung entnommen werden kann. Die mit pneumatischen Antrieben realisierbaren Kräfte sind allerdings naturgemäß begrenzt. Bei einem hydraulischen Antrieb für hohe und besonders hohe Kräfte wäre hier ein eigenes Aggregat zur Erzeugung von Drücken in einem flüssigen Medium erforderlich.

Für Werkstoff-Prüfmaschinen werden allgemein Zweibacken-Spannköpfe bevorzugt, wenn die zu prüfenden Proben eine flache Form aufweisen, oder zumindest flache Enden besitzen. Die Spannbacken weisen hier ebene Spannflächen auf. Die Spannbacken sind austauschbar in dem Spannkopf angeordnet. Sollen Rundproben, die in der Regel auch runde Enden aufweisen, gespannt werden, so müssen entsprechend angepasste Spannbacken verwendet werden.

Der Vorteil von Zweibacken-Spannköpfen ist darin zu sehen, dass die Proben einfach seitlich zwischen die Spannbacken geschoben werden können, was eine sehr einfache Handhabung gewährleistet. Üblicherweise wird bei pneumatischen Antrieben eine Zylinder/Kolben-Anordnung mit einer Kolbenstange verwendet, die an ihrem distalen Ende mit einer Kraftverteilerplatte versehen ist, die ihrerseits mit Spannkeilen verbunden ist.

Eine andere Möglichkeit besteht darin, die Zylinder/Kolben-Anordnung sozusagen axial zu den Spannbacken anzuordnen und die Kraft geradlinig auf diese aufzubringen. Nachteilig hierbei sind allerdings die durch diese Bauform bedingten Abmessungen eines solchen Spannkopfes.

Die notwendige Synchronisation der Spannbacken erfolgt dann durch eine entsprechende Steuerung des Druckregelkreises. Von Nachteil ist hier, insbesondere bei sehr hohen Spannkräften um 2000 kN, dass große Hydraulikzylinder erforderlich sind, so dass das Spannzeug recht groß baut.

Der Erfindung liegt die Aufgabe zugrunde, ein Spannzeug zum kraftschlüssigen Einspannen von Proben zu schaffen, mit dem eine besonders kompakte Bauweise möglich ist und das eine besonders gute Synchronisation der Spannbacken gewährleistet.

Die der Erfindung zugrunde liegende Aufgabe wird bei einem Spannzeug der eingangs genannten Art dadurch gelöst, das die Spannbacken über eine Kraftübersetzungs- und -umlenkungseinrichtung mit dem Antrieb gekoppelt sind, der aus einer Zylinder/Kolben-Anordnung besteht und die oberhalb und parallel zur Betätigungsrichtung der Spannbacken im Gehäuse des Spannzeuges angeordnet sind. Auf diese Weise wird eine äußerst kompakte Bauweise erreicht, wobei besonders große Spannkräfte realisiert werden können.

In einer ersten Fortbildung der Erfindung sind als Kraftübersetzungs- und -umlenkungseinrichtung Kniehebel innerhalb des Gehäuses vorgesehen, welche die Spannbacken jeweils mit dem darüber befindlichen Antrieb verbinden. Mit diesen Kniehebeln lassen sich je nach der Ausführung unterschiedliche Übersetzungsverhältnisse realisieren.

Weiterhin ist jeder Spannbacke ein Kolben zugeordnet, wobei die Enden der Kniehebel an der zugehörigen Spannbacke einerseits und am zugehörigen Kolben andererseits anliegen und wobei die Kniehebel gleichzeitig jeweils um einen fixen Drehpunkt im Gehäuse schwenkbar sind. Damit wird die Übertragung von besonders großen Spannkräften bei gleichzeitiger Ausnutzung der Hebelwirkung ermöglicht.

Das Übersetzungsverhältnis der Kniehebel vom jeweiligen Kolben zur jeweiligen Spannbacke beträgt bevorzugt 2/1.

In einer weiteren Ausgestaltung der Erfindung stützen sich die Kniehebel jeweils in abnehmbaren Verschlussplatten des Spannzeuges und jeweils in einem Koppelelement am Kolben sowie einem Widerlager am jeweiligen Schieber um den fixen Drehpunkt bewegbar ab. Dadurch können Verschleißteile leicht ausgetauscht werden.

Eine weitere Ausgestaltung der Erfindung ist dadurch gekennzeichnet, dass der fixe Drehpunkt der Kniehebel durch ein Gleitlager in der jeweils zugehörigen Verschlussplatte gebildet wird, derart, dass sich die Kniehebel bei einer Verschwenkung im Gleitlager gleichzeitig um den fixen Drehpunkt drehen.

Es ist für Servicezwecke von Vorteil, wenn die Verschlussplatten mit dem Gehäuse des Spannzeuges verschraubt sind.

Eine weitere Ausgestaltung der Erfindung sieht vor, dass die Spannbacken jeweils in einem Schieber befestigt sind, der seinerseits in einer Linearführung im Gehäuse geführt ist, wobei die Linearführung bevorzugt als Prismenführung ausgebildet ist.

Weiterhin ist für jeden Schieber ein Kolben vorgesehen, wobei die Kolben gegenläufig bewegbar sind.

Um ein zentrisches Spannen einer Probe zu gewährleisten, sind die Kolben synchron gegenläufig bewegbar, wobei die Synchronisierung der Kolbenbewegung der gegenläufig betätigbaren Kolben durch das Druckmittel erfolgen kann.

In einer besonderen Variante sind die gegenläufig betätigbaren Kolben durch ein mechanisches Verbindungselement zur Synchronisation miteinander gekoppelt.

Vorzugsweise erfolgt die mechanische Synchronisierung der Kolbenbewegung der Kolben durch jeweils eine mit den Kolben verbundene Zahnstange als Verbindungsmittel, die über ein gehäusefest angeordnetes drehbares Zahnrad miteinander gekoppelt sind, so dass sich die Kolben zwangsläufig synchron gegenläufig bewegen müssen.

In einer weiteren Ausgestaltung der Erfindung sind die Spannbacken formschlüssig im zugehörigen Schieber befestigt.

Das wird dadurch erreicht, dass die Spannbacken mit Hilfe eines sich quer zur Bewegungsrichtung der Spannbacken durch eine Aufnahme im Schieber erstreckenden Bolzens befestigt sind, der sich durch eine Bohrung erstreckt, die sich ebenfalls quer zur Bewegungsrichtung der Spannbacken erstreckt und die zur Hälfte durch den Schieber und zur anderen Hälfte durch den Teil der Spannbacke verläuft, der sich in eine entsprechende Aussparung im Schieber erstreckt. Bei dieser Ausgestaltung wird jegliche Verformung der Aufnahmeelemente für die Spannbacken im Schieber sicher verhindert, so dass jederzeit eine einfache Austauschmöglichkeit der Spannbacken ohne besondere Werkzeuge gewährleistet ist.

Die Erfindung soll nachfolgend an einem Ausführungsbeispiel näher erläutert werden. In den zugehörigen Zeichnungen zeigen:
- Fig. 1:: eine Schnittdarstellung einer ersten Ausführungsform eines erfindungsgemäßen hydraulischen Spannzeugs in unterschiedlichen Schnittebenen der rechten und linken Zeichnungshälfte;
- Fig. 2:: eine Stirnansicht mit eingespanntem Prüfling;
- Fig. 3:: eine Schnittdarstellung einer zweiten Ausführungsform eines erfindungsgemäßen hydraulischen Spannzeugs in unterschiedlichen Schnittebenen der rechten und linken Zeichnungshälfte; und
- Fig. 4:: eine Stirnansicht von zwei einander gegenüber angeordneten erfindungsgemäßen Spannzeugen mit eingespanntem Prüfling.

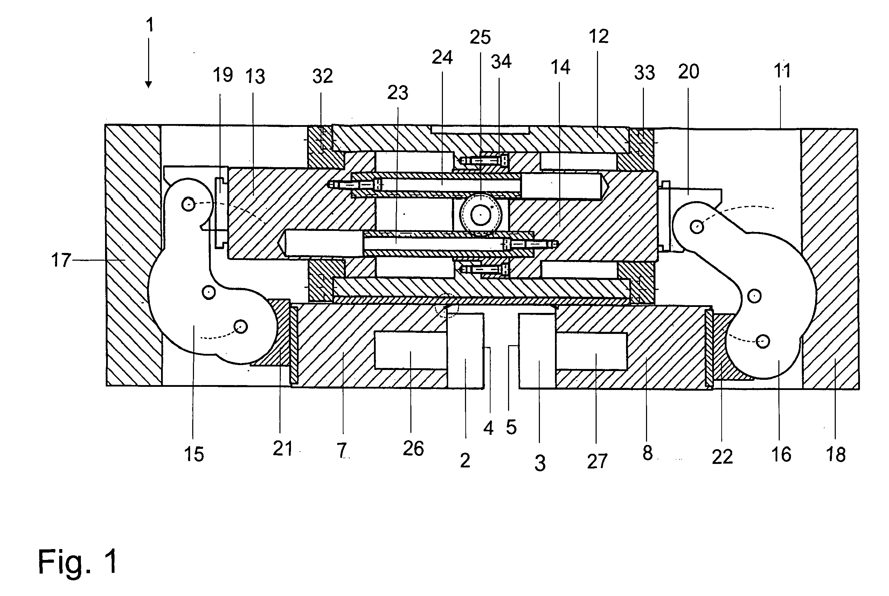

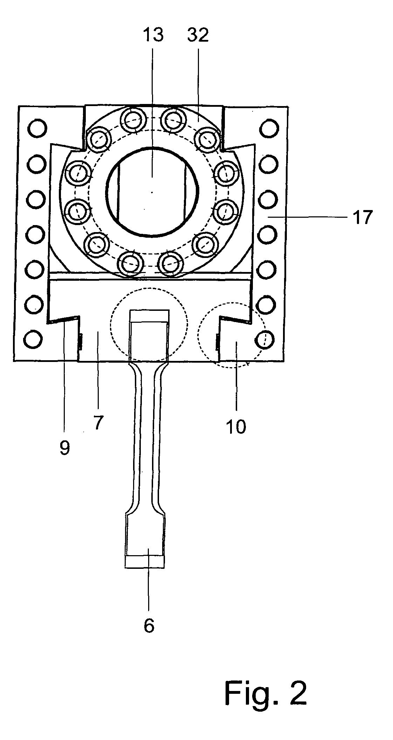

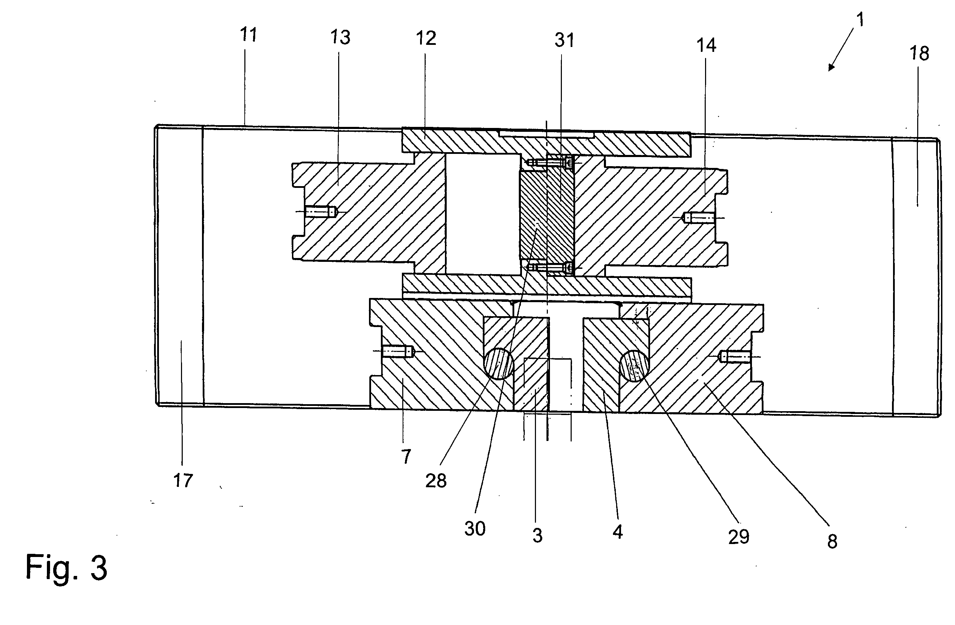

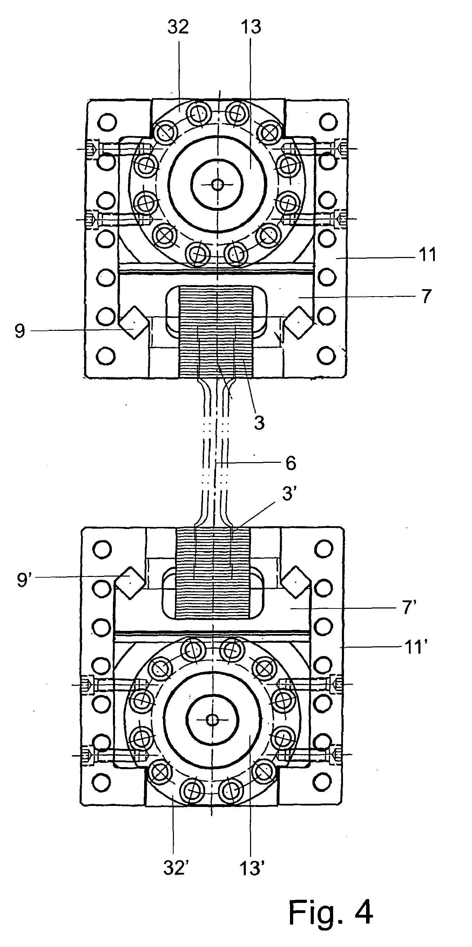

Gemäß der Erfindung enthält das Spannzeug 1 zwei Spannbacken 2, 3 mit einander gegenüberliegenden Spannflächen 4, 5, die zur Erzeugung einer Translations- oder Spannbewegung zum Einspannen eines Prüflings 6 zwischen den Spannbacken 2, 3 mit einem Antrieb gekoppelt sind. Die Spannbacken 2, 3 sind an Schiebern 7, 8 befestigt, die in Führungen 9, 10, z.B. in einer Prismenführung, im Gehäuse 11 des Spannzeuges 1 geführt sind (Fig. 2, 4). Der Antrieb für die Spannbacken 2, 3 besteht aus einer Zylinder/Kolben-Anordnung 12; 13, 14(Fig. 1, 3), die oberhalb und parallel zur Führung 9, 10 für die Schieber 7, 8 im Gehäuse 11 des Spannzeuges 1 angeordnet sind. Der Zylinder 12 ist dabei zweigeteilt und mittig jeweils durch einen Zylinderdeckel 30, 31 verschlossen (Fig. 3). Das erlaubt eine jeweils unterschiedliche Druckregelung in den einzelnen Zylindern einzusetzen.

Für jeden Schieber 7, 8 ist dabei ein Kolben 13, 14 vorgesehen. Wesentlich für die kompakte Bauweise und die für Prüflinge völlig frei zugänglichen Spannbacken 2, 3 ist die Kraftübertragung vom jeweiligen Kolben 13, 14 zum zugehörigen Schieber 7, 8.

Die Kraftübertragung und -umlenkung erfolgt mittels Kniehebel 15, 16 (Fig. 1, rechts, links), die jeweils in abnehmbaren Verschlussplatten 17, 18 des Spannzeuges 1 geführt sind und sich jeweils in einem Koppelelement 19, 20 am Kolben 13, 14 und einem Widerlager 21, 22 am jeweiligen Schieber 7, 8 spielfrei abstützen. Die Kniehebel 15, 16 besitzen im vorliegenden Ausführungsbeispiel eine Hebelübersetzung von 2/1. Die Verschlussplatten 17, 18 sind mit dem Gehäuse 11 des Spannzeuges 1 verschraubt, wodurch ein leichter Zugang in das Spannzeug 1 für Servicezwecke ermöglicht wird.

Die Kniehebel 15, 16 stützen sich in einem Gleitlager in der jeweils zugehörigen Verschlussplatte 17, 18, derart, dass diese sich bei einer Verschwenkung im Gleitlager um einen fixen Drehpunkt im Gehäuse 11 drehen.

Eine Besonderheit (Fig. 1) ist eine mechanische Kopplung der beiden Kolben 13, 14 innerhalb des Zylinders 12 über Zahnstangen 23, 24, die über ein ortsfest im Gehäuse 1 drehbar gelagertes Zahnrad 25 miteinander gekoppelt sind. Dazu ist an jedem Kolben eine Zahnstange 23, 24 befestigt, die jeweils in einer Führung 34 im Gehäuse 11 derart geführt ist, dass beide Zahnstangen gleichzeitig im Eingriff mit dem Zahnrad 25 stehen. Auf diese Weise wird eine vollkommen gleichförmige gegenläufige Bewegung der Kolben 13, 14 und damit der Schieber 7, 8, also einer Bewegung entweder aufeinander zu, bzw. auseinander, gewährleistet. In diesem Fall ist eine Aufteilung des Zylinders in zwei getrennte hydraulische Bereiche nicht notwendig, da die erforderliche gleichförmige Bewegung der Kolben 13, 14 hier rein mechanisch gewährleistet wird. Die äußeren Enden des Zylinders 12 bilden jeweils mit diesem verschraubten Zylinderabschlussringe 32, 33 durch die sich die Kolben 13, 14 erstrecken.

Fig. 3 zeigt eine Ausführung ohne mechanische Zwangsführung der Kolben 13, 14. Hier wird die gleichförmige Bewegung durch getrennte Druckregelung der Hydraulikkreise erreicht. Die Kraftübertragung von den Kolben 13, 14 auf die Schieber 7, 8 erfolgt hier ebenso wie in Fig. 1 über Kniehebel 15, 16, die in Fig. 3 nicht dargestellt sind.

Entsprechend Fig. 1 sind die Spannbacken 2, 3 in einer Aufnahme 26, 27 im jeweiligen Schieber 7, 8 angeordnet. Die Aufnahme 26, 27 besteht hier aus einer axial zur Bewegungsrichtung verlaufenden Bohrung im Schieber 7, 8 und einem mit der Spannbacke 3, 4 verbundenen Bolzen, der in die Bohrung eingeschoben ist.

Diese normalerweise ausreichende Konstruktion hat den Nachteil, dass bei der hier realisierbaren Spannkraft von etwa 3000 kN und der quer zur Führung 9, 10 der Schieber 7, 8 wirkenden Zugkraft eine Verformung der Aufnahme 26, 27 eintreten kann, die schließlich dazu führen kann, dass die Spannbacken 3, 4 nur sehr schwer ausgetauscht werden können.

Fig. 3 zeigt eine Konstruktion der Spannbacken 2, 3 und der zugehörigen Aufnahme 26, 27, bei der derartige Probleme nicht auftreten können und bei der immer ein leichter Austausch der Spannbacken bei eingetretenem Verschleiß gewährleistet ist.

Die Spannbacken 2, 3 sind hier formschlüssig im Schieber 7, 8 befestigt und zwar mit Hilfe eines sich quer zur Bewegungsrichtung der Spannbacken 2, 3 durch eine Aufnahme im Schieber 7, 8 erstreckenden Bolzens 28, 29. Die hierfür erforderliche Bohrung verläuft dazu ebenfalls quer zur Bewegungsrichtung der Spannbacken 2, 3 zur Hälfte durch den Schieber 7, 8 und zur anderen Hälfte durch den Teil der Spannbacke 2, 3, der sich in eine entsprechende Aussparung im Schieber 7, 8 erstreckt.

Zur Durchführung einer Materialprüfung durch Zugbelastung eines Prüflings (Zerreißprobe) sind zwei Spannzeuge 1 mit identischer Konstruktion erforderlich. In Fig. 4 sind daher zwei einander gegenüberliegend in einer entsprechenden nicht dargestellten Vorrichtung angeordnete Spannzeuge 1, 1' in vertikaler Anordnung in einer Stirnansicht mit einem eingespannten Prüfling 6 dargestellt. Für die Durchführung der Zerreißprobe werden die Spannzeuge 1, 1' mit einer vorgegebenen Kraft auseinander bewegt, bis der Prüfling 6 zerreißt. Unterschiede zu den in Fig.1 bis 3 dargestellten Spannzeugen 1 bestehen ansonsten nicht.

### Bezugszeichenliste

- 1, 1': Spannzeug
- 2: Spannbacke
- 3, 3': Spannbacke
- 4: Spannfläche
- 5: Spannfläche
- 6: Prüfling
- 7, 7': Schieber
- 8: Schieber
- 9, 9': Führung
- 10: Führung
- 11, 11': Gehäuse
- 12: Zylinder
- 13, 13': Kolben
- 14: Kolben
- 15: Kniehebel
- 16: Kniehebel
- 17: Verschlussplatte
- 18: Verschlussplatte
- 19: Koppelelement
- 20: Koppelelement
- 21: Widerlager
- 22: Widerlager
- 23: Zahnstange
- 24: Zahnstange
- 25: Zahnrad
- 26: Aufnahme
- 27: Aufnahme
- 28: Bolzen
- 29: Bolzen
- 30: Zylinderdeckel
- 31: Zylinderdeckel
- 32, 32': Zylinderabschlussring
- 33: Zylinderabschlussring
- 34: Führung

## Patentansprüche

1. Spannzeug zum kraftschlüssigen Einspannen von Proben für Werkstoff-Prüfmaschinen, bestehend aus einem Spannzeug mit Spannbacken mit einander gegenüberliegenden Spannflächen, die zur Erzeugung einer Translations- oder Spannbewegung zum Einspannen eines Prüflings zwischen den Spannbacken mit einem druckmittelbetätigten Antrieb gekoppelt sind, **dadurch gekennzeichnet**, das die Spannbacken (2, 3) über eine Kraftübersetzungs- und -umlenkungseinrichtung mit dem Antrieb gekoppelt sind, der aus einer Zylinder/Kolben-Anordnung (12; 13, 14) besteht und die oberhalb und parallel zur Betätigungsrichtung der Spannbacken (2, 3) im Gehäuse (11) des Spannzeuges (1) angeordnet sind.

2. Spannzeug nach Anspruch 1, **dadurch gekennzeichnet, dass** für die Kraftübersetzungs- und -umlenkungseinrichtung Kniehebel (15, 16) innerhalb des Gehäuses (11) vorgesehen sind, welche die Spannbacken (2, 3) jeweils mit dem darüber befindlichen Antrieb verbinden.

3. Spannzeug nach Anspruch 2, **dadurch gekennzeichnet**, das jeder Spannbacke (2, 3) ein Kolben (13; 14) zugeordnet ist und dass die Enden der Kniehebel (15, 16) an der zugehörigen Spannbacke (2, 3) einerseits und am zugehörigen Kolben (13, 14) andererseits anliegen und dass die Kniehebel (15, 16) gleichzeitig jeweils um einen fixen Drehpunkt im Gehäuse (11) schwenkbar sind.

4. Spannzeug nach den Ansprüchen 1 bis 3, **dadurch gekennzeichnet, dass** das Übersetzungsverhältnis der Kniehebel (15, 16) vom jeweiligen Kolben (13, 14) zur jeweiligen Spannbacke (2, 3) 2/1 beträgt.

5. Spannzeug nach Anspruch 2 bis 4, **dadurch gekennzeichnet, dass** sich die Kniehebel (15, 16) jeweils in abnehmbaren Verschlussplatten (17, 18) des Spannzeuges (1) und jeweils in einem Koppelelement (19, 20) am Kolben (13, 14) und einem Widerlager (21, 22) am jeweiligen Schieber (7, 8) um den fixen Drehpunkt bewegbar abstützen.

6. Spannzeug nach einem der Ansprüche 1 bis 5, **dadurch gekennzeichnet, dass** der fixe Drehpunkt der Kniehebel (15, 16) aus einem Gleitlager in der jeweils zugehörigen Verschlussplatte 17, 18) gebildet wird, derart, dass sich die Kniehebel (15, 16) bei einer Verschwenkung im Gleitlager um den fixen Drehpunkt drehen.

7. Spannzeug nach Anspruch 6, **dadurch gekennzeichnet, dass** die Verschlussplatten (17, 18) mit dem Gehäuse (11) des Spannzeuges (1) verschraubt sind.

8. Spannzeug nach einem der Ansprüche 1 bis 7, **dadurch gekennzeichnet, dass** die Spannbacken (2, 3) jeweils in einem Schieber (7, 8) befestigt sind, der seinerseits in einer Linearführung im Gehäuse (1) geführt ist.

9. Spannzeug nach Anspruch 8, **dadurch gekennzeichnet, dass** die Linearführung als Prismenführung ausgebildet ist.

10. Spannzeug nach einem der Ansprüche 1 bis 9, **dadurch gekennzeichnet, dass** für jeden Schieber (7, 8) ein Kolben (13, 14) vorgesehen, wobei die Kolben gegenläufig bewegbar sind.

11. Spannzeug nach Anspruch 10, **dadurch gekennzeichnet, dass** die Kolben (13, 14) synchron gegenläufig bewegbar sind.

12. Spannzeug nach Anspruch 11, **dadurch gekennzeichnet, dass** die Synchronisierung der Kolbenbewegung der gegenläufig betätigbaren Kolben (13, 14) durch das Druckmittel erfolgt.

13. Spannzeug nach Anspruch 11, **dadurch gekennzeichnet, dass** die gegenläufig betätigbaren Kolben (13, 14) durch ein mechanisches Verbindungselement zur Synchronisation miteinander gekoppelt sind.

14. Spannzeug nach Anspruch 13, **dadurch gekennzeichnet, dass** die Synchronisierung der Kolbenbewegung Kopplung der Kolben (13, 14) durch jeweils eine mit den Kolben (13; 14) verbundene Zahnstange (23; 24) als Verbindungsmittel erfolgt, die über ein gehäusefest angeordnetes drehbares Zahnrad (25) miteinander gekoppelt sind.

15. Spannzeug nach Anspruch 1, **dadurch gekennzeichnet, dass** die Spannbacken (2, 3) formschlüssig im zugehörigen Schieber (7, 8) befestigt sind.

16. Spannzeug nach Anspruch 15, **dadurch gekennzeichnet, dass** die Spannbacken (2, 3) mit Hilfe eines sich quer zur Bewegungsrichtung der Spannbacken (2, 3) durch eine Aufnahme im Schieber (7, 8) erstreckenden Bolzen (28, 29) befestigt sind, der sich durch eine Bohrung erstreckt, die sich ebenfalls quer zur Bewegungsrichtung der Spannbacken (2, 3) erstreckt und die zur Hälfte durch den Schieber (7, 8) und zur anderen Hälfte durch den Teil der Spannbacke (2, 3) verläuft, der sich in eine entsprechende Aussparung im Schieber (7, 8) erstreckt.
